# EUROPÄISCHE PATENTANMELDUNG

(11) **EP 1 113 380 A1**
(43) Veröffentlichungstag der Anmeldung: **04.07.2001**
(21) Anmeldenummer: 99126182.7
(22) Anmeldetag: 30.12.1999
(51) Int. Cl.: G06F 17/60, H04H 1/00, H04M 11/08

(54) **Tarifberechnungssystem sowie Abfrageeinheit und Verfahren zum Betreiben eines Tarifberechnungssystems**

(71) Anmelder: Hamburg- Mannheimer Versicherungs-AG, 22297 Hamburg (DE)
(72) Erfinder: Baumbach, Thomas, c/o Hamburg-Mannheimer, D-22297 Hamburg (DE); Gutmann, Patrik, c/o Deutsche Perot Systems GmbH, D-60428 Frankfurt/Main (DE); Kolb, Manfred, c/o Deutsche Perot Systems GmbH, D-60428 Frankfurt/Main (DE)
(74) Vertreter: Steil, Christian, Dipl.-Ing.

(57) **Zusammenfassung**

Es wird ein Tarifberechnungssystem (10), insbesondere zur Berechnung von personenbezogenen Versicherungstarifen vorgeschlagen, mit:
- wenigstens einem zentralen Tarifrechner (18), der Zugriff hat auf wenigstens eine Tariffunktion, die in Abhängigkeit von Parametern variable Tarifwerte ergibt,
- wenigstens einer zentralen Ein-/Ausgabeeinheit (16), die mit dem Tarifrechner (18) gekoppelt ist, und
- einer Mehrzahl von dezentralen Abfrageeinheiten (12), die über eine Kommunikationsverbindung (14) mit der Ein-/Ausgabeeinheit (16) koppelbar sind.

Dabei ist das Tarifberechnungssystem (10) so ausgebildet, daß die zentrale Ein-/Ausgabeeinheit (16) an ein Funknetz (14) angeschlossen ist, daß die dezentralen Abfrageeinheiten jeweils ein mobiles Endgerät (12) des Funknetzes (14) aufweisen und daß die Kommunikationsverbindung mittels eines Dienstes (SMS) zum Senden und Empfangen von alphanumerischen Kurznachrichten des Funknetzes (14) erfolgt.

## Beschreibung

Die vorliegende Erfindung betrifft ein Tarifberechnungssystem, insbesondere zur Berechnung von personenbezogenen Versicherungstarifen, mit:
- wenigstens einem zentralen Tarifrechner, der Zugriff hat auf wenigstens eine Tariffunktion, die in Abhängigkeit von Parametern variable Tarifwerte ergibt,
- wenigstens einer zentralen Ein-/Ausgabeeinheit, die mit dem Tarifrechner gekoppelt ist, und
- einer Mehrzahl von dezentralen Abfrageeinheiten, die über eine Kommunikationsverbindung mit der Ein-/Ausgabeeinheit koppelbar sind.

Die vorliegende Erfindung betrifft ferner eine Abfrageeinheit sowie ein Verfahren zum Betreiben eines solchen Tarifberechnungssystems.

Bekanntermaßen hängen die Tarife von Versicherungen, aber auch Kredittarife, Bauspartarife etc. entscheidend von bestimmten, in der Regel personenbezogenen Parametern ab, beispielsweise dem Alter der zu versichernden Person, der Laufzeit der Versicherung, etc.

Die Berechnung solcher Tarife ist generell von Hand durchführbar. Insbesondere bei Versicherungstarifen sind die zugrunde liegenden Tariffunktionen jedoch nicht unkompliziert. Daher war es traditionell so, daß verschiedene Tarife für verschiedene Ausgangsparameter (z.B. für verschiedene Eintrittsalter und/ oder Laufzeiten einer Lebensversicherung) durchgerechnet und in Tabellen ausgedruckt wurden. Diese Tabellen wurden dann von den Versicherungsgesellschaften den vor Ort, also beim Kunden agierenden Versicherungsvertretern bzw. -maklern bereitgestellt.

Die Tarife von Versicherungen, also die zugrunde liegenden Tariffunktionen, ändern sich jedoch von Zeit zu Zeit. Auch kommen neue Versicherungsgrundtarife hinzu. Die Aktualisierung der beim Versicherungsvertreter vorhandenen Tabellen ist daher ein erheblicher verwaltungstechnischer Aufwand.

Die jeweiligen aktuellen Versicherungstarife liegen in der Form eines Algorithmus generell zentral auf einem Tarifrechner bei der Versicherungsgesellschaft vor. Daher ist es seit jeher auch bekannt, daß ein potentieller Versicherungsnehmer und/oder ein Versicherungsmakler unter Angabe seiner persönlichen Parameter sich für einen bestimmten Versicherungsgrundtarif ein "persönliches" Tarifangebot einholt, das per Post zugesandt wird. In manchen Fällen sind auch telefonische Auskünfte möglich, wenn der Mitarbeiter in der Zentrale online Zugriff auf den Tarifrechner besitzt.

Für einen vor Ort, also beim Versicherungskunden agierenden Versicherungsvertreter sind solche Optionen natürlich keine Hilfe. Vor Ort kommt es nicht nur auf eine aktuelle sondern auch vor allem auf eine schnelle Erstellung von Angeboten an.

Daher ist es auch bekannt, die Tariffunktionen einiger Grundtarife per Diskette oder sonstige Datenübertragung den Versicherungsvertretern zur Verfügung zu stellen. Die Versicherungsvertreter können die Tariffunktionen anschließend auf einen Computer, insbesondere einen tragbaren Computer oder auf ein mobiles Spezialgerät laden. So ist der Versicherungsvertreter vor Ort in der Lage, zumindest für die "ausgelagerten" Grundtarife schnell Angebote zu erteilen. Da die Tarife, wie bereits oben erwähnt, jedoch einem ständigen Wandel unterliegen, ist es notwendig, die auf den mobilen Geräten hinterlegten Tariffunktionen regelmäßig zu aktualisieren, was nicht nur zeit- sondern auch kostenaufwendig ist.

Vor diesem Hintergrund besteht Bedarf nach einem besseren Tarifberechnungssystem.

Erfindungsgemäß wird diese Aufgabe bei dem eingangs genannten Tarifberechnungssystem dadurch gelöst, daß die zentrale Ein/Ausgabeeinheit an ein Funknetz angeschlossen ist, daß die dezentralen Abfrageeinheiten jeweils ein mobiles Endgerät des Funknetzes aufweisen und daß die Kommunikationsverbindung mittels eines Dienstes zum Senden und Empfangen von alphanumerischen Kurznachrichten des Funknetzes erfolgt. Die Aufgabe wird ferner durch eine Abfrageeinheit eines solchen Tarifberechnungssystems sowie durch ein Verfahren zum Betreiben eines solchen Tarifberechnungssystems gelöst, das insbesondere die Schritte aufweist:
- Erstellen einer ersten alphanumerischen Kurznachricht im Format einer Tarifabfrage mittels des mobilen Endgerätes;
- Senden der ersten Kurznachricht an die zentrale Ein-/Ausgabeeinheit;
- Ermitteln wenigstens eines Tarifwertes mittels des zentralen Tarifrechners;
- Erstellen einer zweiten alphanumerischen Kurznachricht mit dem Tarifwert mittels der zentralen Ein-/Ausgabeeinheit; und
- Senden der zweiten Kurznachricht an das mobile Endgerät, das die erste Kurznachricht abgesandt hat.

Mit der Erfindung werden einer oder eine Mehrzahl der folgenden Vorteile erzielt.

Aufgrund des mobilen Endgerätes kann eine Tarifabfrage an jedem beliebigen Ort erfolgen. Ferner kann aufgrund der Verwendung eines alphanumerischen Kurznachrichtenformates eine einfache und schnelle Kommunikation erfolgen. Alphanumerische Kurznachrichten sind leicht ausdruckbar und editierbar. Die Tariffunktionen sind immer aktuell, da immer auf einen zentralen Tarifrechner zugegriffen wird. Als Funknetz können existierende öffentliche Mobilfunknetze wie das GSM-Netz verwendet werden. Die Betreiber solcher Mobilfunknetze bieten für das Versenden von alphanumerischen Kurznachrichten (häufig SMS "Short Message Service" genannt) vergleichsweise günstige Tarife an. Als Endgerät ist natürlich insbesondere ein handelsübliches Mobiltelefon eines öffentlichen Funknetzes wie ein "Handy" verwendbar, das keine zusätzlichen Hard- oder Softwareanforderungen erfüllen muß. Alternativ sind jedoch auch andere Kommunikationsgeräte, wie "Palmtops" mit integriertem Handy etc., denkbar. Auch ist es möglich, daß die zentrale Ein-/Ausgabeeinheit nicht unmittelbar an das Funknetz, insbesondere an ein sogenanntes SMSC (Short Message Service Center) angeschlossen ist, sondern indirekt über das Internet. Denn es ist beispielsweise möglich, mittels eines internet-fähigen Handys Tarifabfragen über das Funknetz zunächst in das Internet einzuspeisen, an dem die zentrale Ein-/Ausgabeeinheit angeschlossen ist.

Da auf seiten der Zentrale sämtliche Vorgänge automatisierbar sind, kann die Möglichkeit vorgesehen werden, Tarifabfragen zu jeder Tages- und Nachtzeit zuzulassen. Ein vor Ort beim Kunden agierender Versicherungsvertreter erhält somit ein flexibles Tarifberechnungssystem an die Hand, wobei das Endgerät des Versicherungsvertreters (Handy, Mobilfunk-Palmtop etc.) für den Versicherungsvertreter wie ein "virtueller Taschenrechner" funktioniert, der unmittelbar Zugriff hat auf zentral abgelegte und insofern ständig aktualisierte Tariffunktionen seiner Versicherungsgesellschaft.

Besonders bevorzugt ist es, wenn eine Tarifabfrage das Senden an die zentrale Ein-/Ausgabeeinheit einer Kurznachricht umfaßt, die einen alphanumerischen Code für eine variable Tariffunktion enthält sowie einen alphanumerischen Code für wenigstens einen Parameter, und/oder wenn ein Tarifresultat von der zentralen Ein-/Ausgabeeinheit eine alphanumerische Kurznachricht umfaßt, die wenigstens eine Bezeichnung der abgefragten Tariffunktion enthält sowie einen oder mehrere Tarifwerte, die in Abhängigkeit von zuvor gesendeten Parametern ermittelt wurden.

Um auf seiten des mobilen Endgerätes mit möglichst wenigen Eingabevorgängen auskommen zu können, ist eine Tarifabfrage generell codiert. Beispielsweise kann für die variablen Tariffunktionen ein zweiziffriger Code vorgesehen werden. Bei einer sicherlich vernünftigen Verwendung eines dezimalen Codes sind folglich einhundert verschiedene Tariffunktionen umfaßt, was für die meisten Fälle ausreichend sein wird. Bei Verwendung eines allgemein alphanumerischen Codes könnten mit zwei Ziffern entsprechend mehr Tariffunktionen abgedeckt werden. Die Parameter werden bei dieser Ausführungsform ebenfalls codiert, wobei die Ziffernanzahl der jeweiligen Parameter an typische Wertebereiche der Parameter angepaßt sind. So ist es sicherlich derzeit vernünftig, für das Eintrittsalter bei einer Kapitallebensversicherung sowie deren Laufzeit zwei Ziffern anzugeben (z.B. Eintrittsalter 20 Jahre, Laufzeit 45 Jahre). Für einen monatlich einzuzahlenden Beitrag sind hingegen sicherlich vier oder mehr Ziffern sinnvoll. Falls die Parameter durch geeignete Trennzeichen voneinander getrennt werden, kann die Länge der Parameter, also die Ziffernanzahl pro Parameter, auch variabel sein.

Der alphanumerische Code für die variable Tariffunktion könnte alternativ ersetzt werden dadurch, daß unterschiedlichen Tariffunktionen jeweils andere Ziel-Telefonnummern für die Kurznachricht zugeordnet werden.

Für Tarifresultate hingegen gilt, daß diese auf seiten der Zentrale in der Regel automatisch erzeugt werden. Daher ist es in der Regel nicht notwendig, bestimmte Angaben zu codieren. Statt dessen werden Angaben alphanumerisch "ausgeschrieben", wie z.B. "Versicherungssumme", "Ablaufleistung" etc. Eine Einschränkung findet allenfalls dadurch statt, daß auf dem Display beispielsweise eines herkömmlichen Handys in der Regel nur relativ wenige Zeichen bzw. Ziffern darstellbar sind und daß die Betreiber der Mobilfunknetze für alphanumerische Kurznachrichten häufig lediglich eine bestimmte Anzahl von Zeichen pro Nachricht zulassen (z.B. 160 Zeichen bei 7 Bit pro Zeichen). Daher kann es sinnvoll sein, Worte wie "Versicherungssumme" in üblicher Weise abzukürzen, beispielsweise durch "Vers.Summe".

Gemäß einer weiteren bevorzugten Ausführungsform sind die Ein/Ausgabeeinheit und der Tarifrechner jeweils an ein zentrales Kommunikationsnetzwerk angeschlossen.

Beispielsweise kann es sich bei dem zentralen Kommunikationsnetzwerk um ein sogenanntes "Intranet" handeln. Bei dieser Konstellation ist es möglich, daß nicht nur die Ein-/Ausgabeeinheit sondern auch andere an das zentrale Kommunikationsnetzwerk angeschlossene Einheiten auf den Tarifrechner zugreifen können. Beispielsweise in der Zentrale tätige Mitarbeiter, die für Telefonauskünfte verantwortlich sind. Das Tarifberechnungssystem erhält auf diese Weise eine außerordentlich flexible Struktur.

Ferner ist es bevorzugt, wenn die Ein-/Ausgabeeinheit einen Zwischenspeicher aufweist, der zur Zwischenspeicherung einer größeren Anzahl von ermittelten Tarifwerten zu bereits erfolgten Tarifabfragen ausgelegt ist.

Obgleich die Möglichkeit der Kombination von personenbezogenen Parametern für eine Tarifabfrage nahezu unendlich groß ist, ist es in der Praxis so, daß einige Parameterkombinationen häufiger abgefragt werden als andere. Dies liegt daran, daß Kapitallebensversicherungen beispielsweise vermehrt in einem Alter abgeschlossen werden, wenn eine Berufsausbildung gerade beendet ist. Auch die Laufzeit richtet sich häufig nach üblichen Maßstäben wie beispielsweise dem Renteneintrittsalter. Folglich ist es nicht ungewöhnlich, wenn eine Tarifabfrage mit den Parametern "25 Jahre Eintrittsalter, 40 Jahre Laufzeit und DM 250,-- Monatsbeitrag" erfolgt. Die Resultate solcher Tarifabfragen werden in dem Zwischenspeicher gespeichert. Falls daher später - auch von einem anderen Endgerät - die gleiche Abfrage wieder getätigt wird, kann das Resultat direkt aus dem Zwischenspeicher entnommen werden, ohne den zentralen Tarifrechner belasten zu müssen.

Auch ist es von Vorteil, wenn die Ein-/Ausgabeeinheit eine Schnittstelleneinheit zum Umsetzen des Formats von Kurznachrichten des Mobilfunkdienstes in ein HTTP-Format und eine Verarbeitungseinheit aufweist, in der die Kurznachrichten im HTTP-Format verarbeitet werden.

Während das Format für das Erstellen und Übermitteln der Kurznachrichten zumindest bei der Benutzung öffentlicher Mobilfunknetze vorgegeben ist, ist es bevorzugt, wenn Tarifabfragen "hausintern" in einem effizienten Abfrageformat erfolgen, das auch von anderen Einheiten der Versicherungsgesellschaft genutzt werden kann. Um beispielsweise ebenfalls einen Zugriff auf den zentralen Tarifrechner über das Internet zu ermöglichen, ist es sinnvoll, die Abfragen in das HTTP-Protokoll bzw. -Format zu übersetzen ("Hyper Text Transfer Protokoll"), das bekanntlich das standardisierte Übertragungsprotokoll für HTML-Dokumente ("Hyper Text Markup Language") im Internet ist.

Gemäß einer weiteren bevorzugten Ausführungsform weist die Ein/Ausgabeeinheit eine Mehrzahl von Modulen auf, einschließlich eines Benutzermoduls zum Verwalten von Benutzerrechten sowie von Anmeldungen und/oder Abmeldungen von Benutzern, wobei eine Abmeldung vorzugsweise automatisch eine bestimmte Zeitspanne nach einer Anmeldung bzw. einer letzten Abfrage erfolgt.

Die Benutzerrechte können in Form von sogenannten Black- oder White-Listen geregelt werden. Eine Black-Liste enthält alle Benutzer, die vom Zugriff auf das System ausgeschlossen sind. Eine White-Liste enthält alle Benutzer, die Zugriff auf das System haben. Bei Verwendung einer White-Liste können die Benutzer zur Nutzung spezifischer Dienste (z.B. einzelner Tarife) innerhalb des Systems berechtigt werden.

Die An- und Abmeldung dienen in erster Linie dazu, die aktiven Teilnehmer des Systems zu kennen. Dies kann insbesondere sinnvoll sein, um Nachrichten an alle Benutzer zu versenden. Eine Anmeldung hat folglich nichts mit Benutzerrechten zu tun. Sie kann explizit oder implizit bei der ersten Anwendung erfolgen. Eine automatische Abmeldung erfolgt in der Regel allenfalls nach einem längeren Zeitraum von z.B. einem Monat.

Ferner ist denkbar, daß ein Benutzer bei entsprechender Berechtigung dem System andere Benutzer per alphanumerischer Kurznachricht bekanntmachen kann, also den anderen Benutzer beispielsweise in eine White-Liste eintragen kann.

Eine Berechtigung kann beispielsweise mittels der gemeinsam mit einer Kurznachricht gewöhnlich übermittelten Rufnummer des mobilen Endgerätes überprüft werden.

Gemäß einer weiteren bevorzugten Ausführungsform weist die Ein/Ausgabeeinheit eine Mehrzahl von Modulen auf, einschließlich eines Vorlagenmoduls zum Übersenden von Vorlagen für Tarifabfragen und/oder eines Listmoduls zum Übersenden einer Liste der vorhandenen Module an ein anforderndes mobiles Endgerät.

Bei dieser Ausführungsform wird ein höchstmögliches Maß an Komfort für den Benutzer des mobilen Endgerätes erzielt. Aufgrund des Listmoduls ist es dem Benutzer möglich, zunächst mittels eines - einfach zu merkenden - Befehls die Liste aller möglichen Module und folglich aller möglichen Dienstleistungen abzufragen, die durch das Tarifberechnungssystem angeboten werden. Um auch die Eingabe einer Abfrage möglichst komfortabel und von vornherein fehlerfrei durchführen zu können, wird mittels des Vorlagenmoduls angeboten, an den Benutzer zunächst eine Vorlage für eine Tarifabfrage zu übermitteln. Durch die Vorlage ist es möglich, daß der Benutzer in eine bereits "vorformatierte" Kurznachricht lediglich noch die benutzerspezifischen Parameter einträgt und sich ansonsten über die Syntax bzw. Semantik der Tarifabfragen keine weiteren Gedanken machen muß. Schneller ist es natürlich, wenn ein Benutzer die Syntax und die Semantik kennt und die Tarifabfrage gleich ohne Vorlage eingibt. Das System ist folglich hoch flexibel, da es sowohl für Wenignutzer als auch für Vielnutzer leicht und effizient anwendbar ist.

Gemäß einer weiteren bevorzugten Ausführungsform weist die Ein/Ausgabeeinheit eine Mehrzahl von Modulen auf, einschließlich eines Nachrichtenmoduls zum unaufgeforderten Senden von Nachrichten an sämtliche mobile Endgeräte des Systems.

Während im wesentlichen alle übrigen zwischen einem Endgerät und der Zentrale auszutauschenden Kurznachrichten sogenannte "Point-to-Point-Verbindungen" sind, ist es bei der bevorzugten Ausführungsform auch möglich, mittels des Nachrichtenmoduls sämtliche angemeldeten Endgeräte anzusprechen. Realisiert wird dies in der Regel durch Verschicken einer Nachricht "point-to-point" unmittelbar nacheinander an alle angemeldeten Teilnehmer. Hierdurch ist es möglich, sämtliche angemeldeten Teilnehmer des Tarifberechnungssystems über neue Tarife, Tarifänderungen, Wartungszeiten des Tarifrechners etc. zu informieren.

Da die alphanumerischen Kurznachrichten gewöhnlich auf dem Endgerät abspeicherbar sind, kann ein Benutzer sich auf diese Weise ein Register mit den letzten "Neuigkeiten" des Systems halten.

Obgleich sich als mobiles Endgerät jedes beliebige Mobilfunktelefon ("Handy") eignet, das zum Austausch von alphanumerischen Kurznachrichten (SMS) befähigt ist, versteht sich, daß auch andere Arten von mobilen Endgeräten in dem Tarifberechnungssystem verwendet werden können. So ist es zunächst natürlich möglich, an das Handy Zusatzgeräte wie eine Tastatur zum Eingeben von alphanumerischen Kurznachrichten und/oder einen Drucker zum Ausdrucken von alphanumerischen Kurznachrichten anzuschließen. Ferner ist es möglich, ein Handy mit einem weiteren mobilen Kommunikationsgerät wie beispielsweise einem Palmtop oder einem Notebook zu koppeln, beispielsweise mittels einer IR-Schnittstelle. Auf diese Weise können vorformulierte Tarifabfragen, die auf dem weiteren Kommunikationsgerät gespeichert sind, in das Handy eingegeben werden und dann anschließend an die zentrale Ein-/Ausgabeeinheit übermittelt werden. Auf diese Weise kann das Editieren von alphanumerischen Kurznachrichten erheblich vereinfacht werden. Schließlich ist es denkbar, daß derartige mobile Kommunikationsgeräte mit den Funktionen eines Handys ausgestattet werden, jedenfalls soweit das Senden und Empfangen von alphanumerischen Kurznachrichten betroffen ist. Schließlich sind als mobile Endgeräte auch mobile Geräte zum Internet-Zugang denkbar, so z.B. internetfähige Handys, Notebook-Computer mit Satellitenfunkverbindung in das Internet, oder spezielle Internet-Funkdienste, die den ständigen Zugriff auf das Internet mittels mobiler Endgeräte gestatten.

Weitere Vorteile und Merkmale ergeben sich aus der nachstehenden Beschreibung von bevorzugten Ausführungsformen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform des erfindungsgemäßen Tarifberechnungssystems;
- Fig. 2: eine schematische Detaildarstellung des Tarifberechnungssystems der Fig. 1;
- Fig. 3: eine schematische Darstellung der Grundfunktionen und Unterfunktionen des erfindungsgemäßen Tarifberechnungssystems der Fig. 1;
- Fig. 4: eine schematische Darstellung der möglichen Interaktionsabläufe des Tarifberechnungssystems der Fig. 1;
- Fig. 5: ein mögliches HTTP-Dienstabfrageformat;
- Fig. 6: ein mögliches SMS-Nachrichtenformat;
- Fig. 7: beispielhafte SMS-Codes; und
- Fig. 8: ein beispielhaftes SMS-Resultatformat.

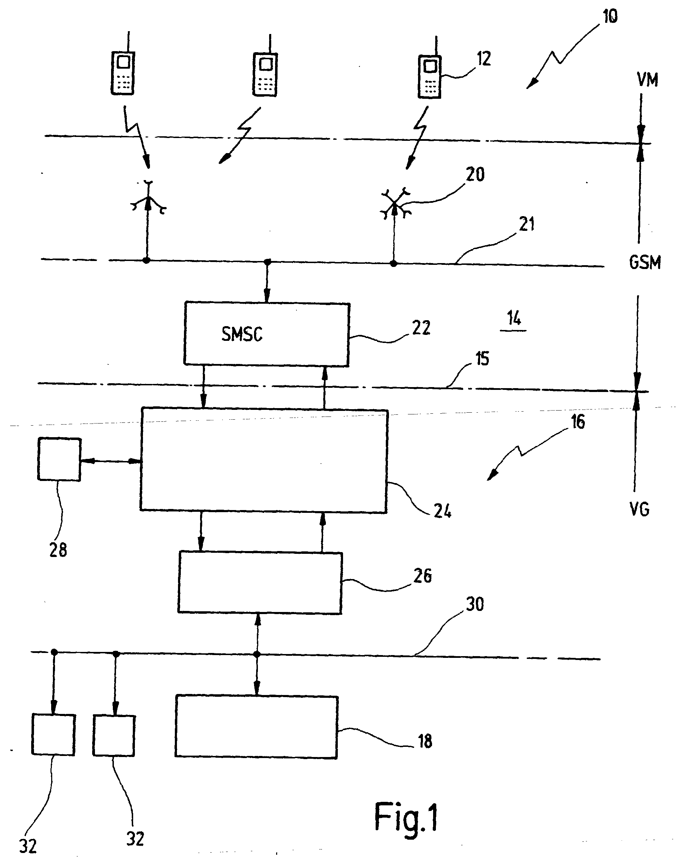

Ein erfindungsgemäßes Tarifberechnungssystem für eine Versicherungsgesellschaft ist in Fig. 1 generell mit 10 bezeichnet.

Das Tarifberechnungssystem 10 umfaßt eine Mehrzahl von dezentralen Abfrageeinheiten in Form von mobilen Endgeräten 12 eines Funknetzes 14. Bei den mobilen Endgeräten 12 kann es sich beispielsweise um Handys 12 handeln. Das Funknetz 14 ist beispielsweise ein GSM-Mobilfunknetz (GSM Group Speciale Mobile).

Die Endgeräte 12 sind mobil und können überall verwendet werden, wo sich ein Benutzer VM gerade aufhält, beispielsweise ein Versicherungsvertreter, der einen Kunden in dessen Haus berät;

Das Tarifberechnungssystem 10 umfaßt ferner eine zentrale Ein-/Ausgabeeinheit 16, wobei sämtliche Kommunikation zwischen dem Funknetz 14 und der zentralen Ein-/Ausgabeeinheit 16 über eine "Firewall" 15 erfolgt.

Das Tarifberechnungssystem 10 umfaßt ferner einen zentralen Tarifrechner 18.

Der Begriff zentral ist im vorliegenden Falle so zu verstehen, daß sich die Ein-/Ausgabeeinheit und der Tarifrechner in einem Gebäude der Versicherungsgesellschaft VG befindet. Generell ist es möglich, für das gesamte Tarifberechnungssystem nur eine derartige Zentrale vorzusehen oder eine Mehrzahl von beispielsweise regionalen Zentralen.

Das Funknetz 14 umfaßt in an sich herkömmlicher Weise eine Mehrzahl von Funkantennen 20, die verteilt über die gesamte Servicefläche des Funknetzes angeordnet sind, derart, daß ein Endgerät 12 sich, je nach Standort, an einer der Funkantennen 20 anmeldet. Die Funkantennen 20 sind an einem Kommunikationsnetzwerk 21 des Funknetzes 14 angeschlossen, wobei das Kommunikationsnetzwerk 21 zumindest teilweise ein Festnetz sein kann.

An das Kommunikationsnetzwerk 21 ist ferner ein Zentrum 22 für alphanumerische Kurznachrichten (SMSC - Short Message Service Center) angeschlossen.

Das Funknetz 14 ist ein öffentliches Funknetz, das von speziellen Betreibergesellschaften betrieben wird. Entscheidend ist, daß das Funknetz 14 einen Kanal für alphanumerische Kurznachrichten (SMS - Short Message Service) bereitstellt. Dieses Merkmal des Funknetzes 14 ist an sich wohl bekannt und wird beispielsweise im privaten Bereich dazu verwendet, um kurze Nachrichten auszutauschen. Da eine Übermittlung von alphanumerischen Zeichen (Buchstaben und/oder Ziffern) mit einer außerordentlich geringen Bandbreite erfolgen kann, können solche Kurznachrichten generell preisgünstig verschickt werden.

Bei den SMS-Kurznachrichten unterscheidet man zwischen sogenannten Point-to-Point-Nachrichten, die von einem Endgerät 12 zu einem anderen Endgerät 12 geschickt werden, und sogenannten Cell-Broadcast-Nachrichten, die von einer Stelle an eine Mehrzahl von Endgeräten 12 versendet werden. Generell erfolgt der Verkehr von SMS-Nachrichten über das SMSC 22.

Auf der Seite der Versicherungsgesellschaft VG umfaßt die zentrale Ein-/Ausgabeeinheit 16 eine Zentraleinheit 24, die über die Firewall 15 mit dem SMSC in Verbindung steht. An die Zentraleinheit 24 ist ferner ein Proxy-Server 26 sowie ein Administratorterminal 28 angeschlossen.

Der Proxy-Server 26 ist an ein internes Kommunikationsnetzwerk der Versicherungsgesellschaft VG (z.B. ein Intranet) angeschlossen, an das auch der zentrale Tarifrechner bzw. Host 18 angeschlossen ist.

Ferner können an das interne Kommunikationsnetzwerk 30 weitere Einheiten angeschlossen sein, z.B. hausinterne Anwender mit ihren PCs 32.

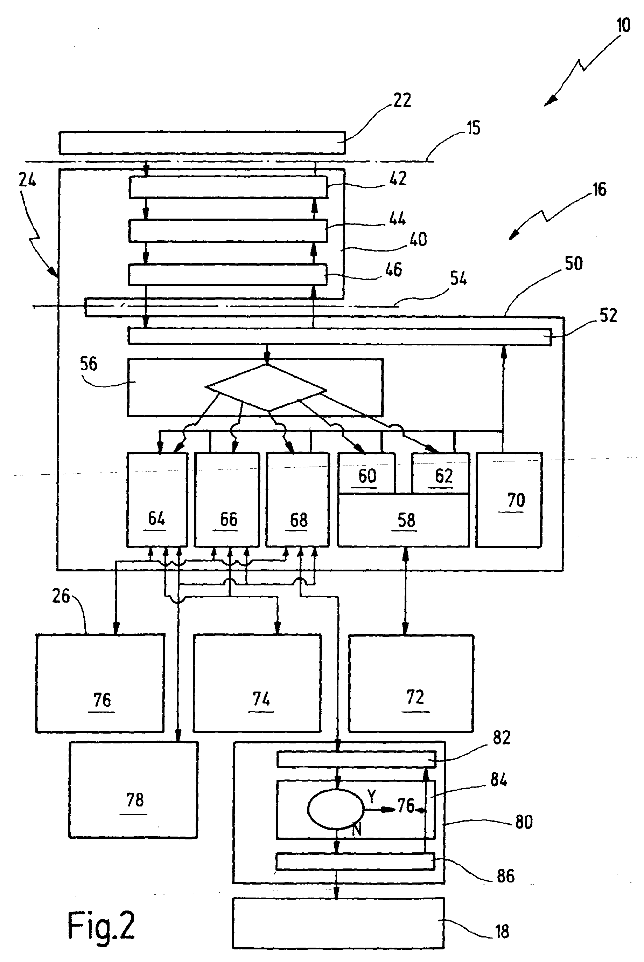

Details des erfindungsgemäßen Tarifberechnungssystems auf seiten der Versicherungsgesellschaft VG sind in Fig. 2 dargestellt.

Die Zentraleinheit 24 umfaßt eine Schnittstelleneinheit 40, die ein SMSC-Interface 42 aufweist. Das SMSC-Interface 42 steht über die Firewall 15 mit dem SMSC in Verbindung, typischerweise in Form einer Standleitung.

Die Schnittstelleneinheit 24 umfaßt ferner ein SM/ASI-Interface (Short Message Advanced Service Interface), das mit dem SMSC-Interface 42 gekoppelt ist, sowie ein SM/ASI-HTTP-Interface 46, das mit dem SM/ASI-Interface 44 gekoppelt ist.

Die Funktionen des SMSC-Interface 42 und des SM/ASI-Interface 44 können beispielsweise realisiert werden durch ein Gateway, das unter dem Begriff N-PLEX Mobile der Firma Isocor bekannt ist (http:\\www.isocor.com). Dieses Gateway ist üblicherweise mit der Programmiersprache JAVA aufgebaut.

Auch das SM/ASI-HTTP-Interface 46 wird üblicherweise in der Programmiersprache JAVA realisiert. Dabei soll dieses Interface 46 ein POST für jede Anfrage ausführen. Da jede Anfrage auf eine Antwort wartet, müssen parallele Threads gestartet werden. Gegebenenfalls muß in diesem Interface bereits für die Erzeugung von Fehlermeldungen gesorgt werden, die die Verbindung zu den weiteren zentralen Komponenten der Zentraleinheit 24 betreffen.

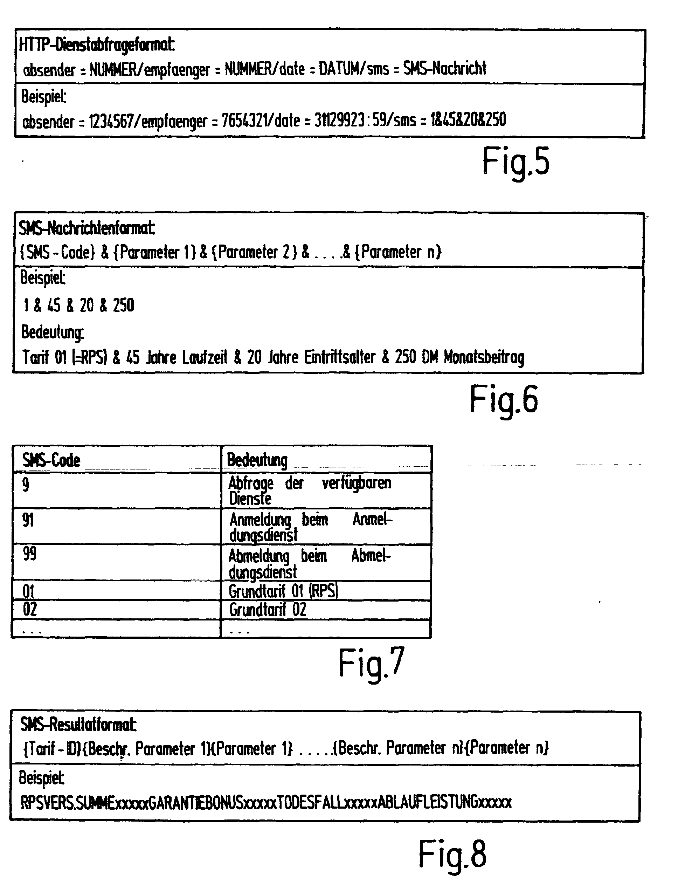

Nach der Umsetzung der alphanumerischen Kurznachrichten vom Format bzw. Protokoll der SMS-Welt in das Format bzw. Protokoll der HTTP-Welt werden diese Kurznachrichten, gegebenenfalls ergänzt durch weitere Angaben wie in Fig. 5 angegeben, an eine Verarbeitungseinheit 50 der Zentraleinheit 24 übergeben. Zu diesem Zweck weist die Verarbeitungseinheit 50 eine HTTP-Schnittstelle 52 auf, die mit dem SM/ASI-HTTP-Interface 46 über eine interne Firewall 54 in Verbindung steht. Die interne Firewall 54 ist nicht unbedingt erforderlich.

Eingehende alphanumerische Kurznachrichten werden von der HTTP-Schnittstelle 52 an ein Verteilungsmodul 56 der Verarbeitungs einheit 50 geleitet. Je nach Art der alphanumerischen Kurznachricht greift das Verteilungsmodul 56 auf eine Mehrzahl von Modulen der Verarbeitungseinheit 50 zu, einschließlich eines Benutzermoduls 58 mit einem Anmeldungsmodul 60 und einem Abmeldungsmodul 62, eines Listmoduls 64, eines Vorlagenmoduls 66 und eines Tarifabfragemoduls 68.

Die genannten Module 58 bis 68 sind für das Übermitteln von alphanumerischen Kurznachrichten an die Endgeräte 12 ebenfalls mit der HTTP-Schnittstelle 52 gekoppelt.

Die Verarbeitungseinheit 50 weist ferner ein Nachrichtenmodul 70 auf, über das zentral für sämtliche Endgeräte 12 des Tarifberechnungssystems 10 bestimmte einheitliche Nachrichten erzeugt und abgesandt werden können. Solche zentral für alle Endgeräte 12 erzeugte Nachrichten umfassen beispielsweise die Bekanntgabe neuer Versicherungstarife, Wartungszeiten der Zentraleinheit 24, in denen kein Zugriff auf die Zentraleinheit 24 möglich ist, etc.

Die Module 58 bis 70 sind jeweils in Software realisiert und sind dazu ausgelegt, in dem sie aufrufenden Kontext teilweise oder ganz die Verantwortung für die fachliche und technische (Dialog/Maske/Nachricht) Betreuung des Benutzers zu übernehmen. Dabei kann ein Modul Verantwortung teilweise oder ganz auf andere Module delegieren und kann sogenannte "Services" zur Erfüllung einer Aufgabe heranziehen.

Unter einem "Service" wird ebenfalls eine Softwareeinheit verstanden, die von verschiedenen Diensten und Services aufgerufen werden kann, um kontinuierliche oder singuläre Aufgabe zu übernehmen. Ein Service ist im Gegensatz zu den Modulen 58-70 nicht spezifisch für das Kurznachrichtensystem, so daß seine Funktionalität auch für andere Endgeräte bzw. Protokolle verwendet werden kann. Dabei kann man technische und fachliche Services unterscheiden.

So haben die Module 58 bis 68, je nach Funktion, Zugriff auf eines oder mehrere der folgenden Services: ein Benutzerservice 72, ein Dienstverwaltungsservice 74, ein Proxy-Service 76, ein Statistikservice 78 sowie ein Tarifberechnungsservice 80.

Eine Kommunikation zwischen der Zentraleinheit 24 und dem zentralen Tarifrechner 18 erfolgt über den Tarifberechnungsservice 80 - und gegebenenfalls das interne Kommunikationsnetzwerk 30 (Fig. 1).

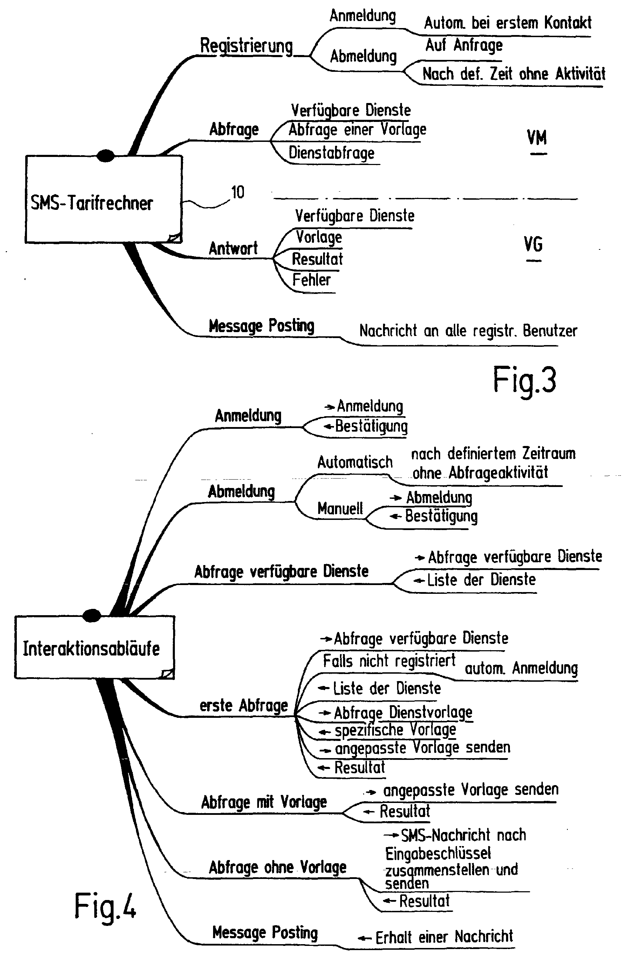

Zur Darstellung der möglichen Funktionen und Interaktionsabläufe des Tarifberechnungssystems 10 (SMS-Tarifrechner) wird Bezug genommen auf Fig. 3 und 4.

Auf der Seite des Benutzers VM stehen zwei Grundfunktionen zur Verfügung, nämlich "Registrierung" einerseits und "Abfrage" andererseits.

Auf der Seite der Versicherungsgesellschaft VG stehen ebenfalls zwei Grundfunktionen zur Verfügung, zum einen "Antwort" und zum anderen "Message Posting", das, wie bereits oben ausgeführt mittels des Nachrichtenmoduls 70 durchgeführt wird.

Die Registrierung umfaßt die Unterfunktionen Anmeldung und Abmeldung. Eine Anmeldung folgt automatisch beim ersten Kontakt, mittels des Anmeldungsmoduls 60. Dabei wird unter anderem überprüft, ob das sich anmeldende Endgerät 12 autorisiert ist. Zu diesem Zwecke wird in dem Benutzermodul 58 eine Liste der zugelassenen Endgeräte 12 geführt. Die Identifikation kann beispielsweise erfolgen über die Telefonnummer des Endgerätes und/oder einen zusätzlichen Zutrittscode (PIN-Nr., die ebenfalls automatisch per SMS übermittelbar ist).

Sofern ein nicht autorisiertes Endgerät 12 versucht sich anzumelden, wird von dem Anmeldungsmodul 60 eine Fehlermeldung erzeugt und per SMS an das Endgerät 12 gesendet.

Eine Abmeldung erfolgt ebenfalls mittels des Endgerätes 12 durch eine spezielle Abmeldungs-Anfrage oder nach einer definierten Zeit ohne Aktivität automatisch mittels des Abmeldungsmoduls 62.

Bei der Funktion-Abfrage werden die Unterfunktionen "verfügbare Dienste", "Abfrage einer Vorlage" und "Dienstabfrage" unterschieden.

Die Abfrage "verfügbare Dienste" wird von dem Listmodul 64 verarbeitet. In Antwort hierauf erhält das Endgerät 12 von der Zentraleinheit 24 eine Liste der verfügbaren Dienste.

Auf eine "Abfrage einer Vorlage", die von dem Vorlagenmodul 66 verarbeitet wird, versendet die Zentraleinheit 24 eine spezifische, für einen bestimmten Grundtarif verwendbare Abfragevorlage.

Bei der "Dienstabfrage" übersendet der Benutzer des Endgerätes 12 eine bestimmte personenspezifische Tarifabfrage an die Zentraleinheit 24. Dabei kann er entweder eine ihm zuvor zugesandte Vorlage nutzen und diese anpassen. Alternativ kann der Benutzer, insbesondere ein versierter Benutzer, eine "Dienstabfrage" bei Kenntnis der Syntax und Semantik auch ohne Vorlage selber erzeugen.

Eine solche Tarifabfrage wird von dem Tarifabfragemodul 68 behandelt. Dieses nutzt dabei den Tarifberechnungsservice 80. In dem Tarifberechnungsservice 80 sind eine Schnittstelle 82 zu dem Tarifabfragemodul 68 sowie eine Schnittstelle 86 zu dem zentralen Tarifrechner 18 vorgesehen. Zwischen die beiden Schnittstellen 82, 86 ist eine Proxy-Anbindung 84 geschaltet. Diese wiederum greift zu auf den Proxy-Service 76 (Fig. 2).

In dem Proxy-Service 76 steht ein aufruferbezogener Cash zur Verfügung, der schnelle Antworten auf Anfragen unterstützen soll. Besonders häufig von dem Tarifabfragemodul 68 erhaltene Tarifabfragen (mit bestimmten personenbezogenen Parameterkombinationen) werden in dem Proxy-Service 76 gespeichert.

Folglich erfolgt in der Proxy-Anbindung 84 des Tarifberechnungsservice 80 zunächst eine Abfrage, ob die aktuell erhaltene Tarifabfrage in dem Proxy-Service 76 gespeichert ist oder nicht. Wenn ja, wird das Resultat der Tarifabfrage aus dem Proxy-Service 76 geholt und mittels des Tarifabfragemoduls 68 an das Endgerät 12 übermittelt.

Wenn andererseits die aktuelle Tarifabfrage im Proxy-Service 76 nicht vorhanden ist, erfolgt mittels der Schnittstelle 86 eine Anfrage an den zentralen Tarifrechner 18. Die Anbindung des zentralen Tarifrechners 18 kann beispielsweise über MDp realisiert werden. Es versteht sich, daß die Syntax der ursprünglich von dem Endgerät 12 übermittelten alphanumerischen Kurzmitteilung syntaktisch bzw. semantisch analysiert und gegebenenfalls decodiert werden muß, um mittels geeigneter Abfragebefehle auf den zentralen Tarifrechner 18 zuzugreifen. Umgekehrt müssen die Ergebnisse, also die Tarifresultate des zentralen Tarifrechners 18 mittels der Schnittstellen 86, 82 in geeignete alphanumerische Kurznachrichten umgesetzt werden und anschließend mittels des Tarifabfragemoduls 68 verschickt werden.

Die zentralen Komponenten 16, 18 (Fig. 1) des Tarifberechnungssystems 10 sind so ausgelegt, daß jede Tarifabfrage eines Endgerätes 12 innerhalb von 10 Sekunden bearbeitet und eine entsprechende Tarifresultat-Nachricht an das Endgerät 12 zurückgesandt wird. Dies gilt unabhängig davon, ob auf den zentralen Tarifrechner 18 zuzugreifen ist oder ob eine Tarifabfrage mittels des Proxy-Services 76 (Proxy-Server 26 in Fig. 1) erledigt werden kann.

Fig. 5 zeigt ein HTTP-Dienstabfrageformat, wie es beispielsweise zwischen dem SM/ASI-HTTP-Interface 46 und der HTTP-Schnittstelle 52 verwendet wird. Das Abfrageformat enthält neben der am Ende angeordneten eigentlichen SMS-Nachricht in einem "header" eine Angabe des Absenders (Tel.-Nr. des Endgerätes 12), eine Angabe des Empfängers (Tel.-Nr. der Schnittstelleneinheit 40, eine Angabe des Datums, inkl. Uhrzeit). Die Angaben sind durch Trennzeichen wie bspw. "/" voneinander separiert.

Die eigentliche SMS-Nachricht ist in einem Format ausgeführt, das in Fig. 6 dargestellt ist.

Eine SMS-Nachricht erhält zu Anfang immer einen SMS-Code, von denen einige beispielhaft in Fig. 7 dargestellt sind. So bedeutet ein SMS-Code "9" die Abfrage der verfügbaren Dienste. Der SMS-Code "91" steht für eine Anmeldung beim Anmeldungsdienst 60. Der SMS-Code "99" steht für eine entsprechende Abmeldung.

Der SMS-Code "01" gibt beispielsweise einen Grundtarif 01 an (der z.B. eine Kapitallebensversicherung "RPS" mit Unfallzusatzversicherung und Berufsunfähigkeitszusatzversicherung für einen Mann sein kann). Sofern ein Grundtarif abgefragt wird, sind in einer SMS-Nachricht dem SMS-Code einer oder mehrere Parameter nachgestellt, verbunden jeweils durch ein "&-Zeichen". Der Parameter 1 kann beispielsweise die Laufzeit sein (z.B. 45 Jahre). Der Parameter 2 kann beispielsweise das Eintrittsalter für die Kapitallebensversicherung sein (z.B. 20 Jahre). Der Parameter n kann beispielsweise ein Monatsbetrag sein, den die zu versichernde Person einzahlen möchte (z.B. DM 250,--).

Eine solche SMS-Nachricht ist, wie es in Fig. 5 zu sehen ist, aus elf alphanumerischen Zeichen zusammensetzbar. Durch die Codierung der Grundtarife und der Abfragedienste ist es möglich, daß Vielbenutzer solche SMS-Nachrichten von Hand, ohne die Verwendung von Vorlagen eingeben.

Um den SMS-Code und die Parameter 1 bis n jeweils zum einen einfach eingeben zu können und zum anderen Eingabefehler möglichst zu vermeiden, wird zwischen die Eingabe dieser numerischen Werte jeweils ein Trennzeichen gesetzt, hier ein "&-Zeichen". Der Leader, also die Angabe von Absender, Empfänger und Datum, wird automatisch aus den Daten des über den SMS-Kanal des Funknetzes 14 ankommenden Anrufs extrahiert und muß vom Benutzer nicht extra eingegeben werden.

Fig. 8 schließlich zeigt ein SMS-Resultatformat, das von dem Tarifabfragemodul 68 erzeugt wird. Das SMS-Resultatformat enthält zunächst eine Tarif-ID, anschließend eine Beschreibung eines Parameters 1, anschließend den Parameter 1 selbst, ..., schließlich die Beschreibung eines Parameters n und den Parameter n selbst. In dem in Fig. 8 gezeigten Beispiel ist die Tarif-ID der Grundtarif "RPS". Anschließend wird zunächst die Versicherungssumme angegeben, dann ein Garantiebonus, dann eine Leistung im Todesfall, dann eine Ablaufleistung. Die in Fig. 8 verwendeten Stellvertreterzeichen "x" stehen für bestimmte Summenangaben in DM.

## Patentansprüche

1. Tarifberechnungssystem (10), insbesondere zur Berechnung von personenbezogenen Versicherungstarifen, mit:
- wenigstens einem zentralen Tarifrechner (18), der Zugriff hat auf wenigstens eine Tariffunktion, die in Abhängigkeit von Parametern variable Tarifwerte ergibt,
- wenigstens einer zentralen Ein-/Ausgabeeinheit (16), die mit dem Tarifrechner (18) gekoppelt ist, und
- einer Mehrzahl von dezentralen Abfrageeinheiten (12), die über eine Kommunikationsverbindung (14) mit der Ein-/Ausgabeeinheit (16) koppelbar sind,
dadurch gekennzeichnet, daß
die zentrale Ein-/Ausgabeeinheit (16) an ein Funknetz (14) angeschlossen ist, daß die dezentralen Abfrageeinheiten jeweils ein mobiles Endgerät (12) des Funknetzes (14) aufweisen und daß die Kommunikationsverbindung mittels eines Dienstes (SMS) zum Senden und Empfangen von alphanumerischen Kurznachrichten des Funknetzes (14) erfolgt.

2. System nach Anspruch 1, dadurch gekennzeichnet, daß eine Tarifabfrage das Senden an die zentrale Ein-/Ausgabeeinheit (16) einer Kurznachricht umfaßt, die einen alphanumerischen Code für eine variable Tariffunktion enthält sowie einen alphanumerischen Code für wenigstens einen Parameter und/oder daß ein Tarifresultat von der zentralen Ein-/Ausgabeeinheit (16) eine alphanumerische Kurznachricht umfaßt, die wenigstens die Bezeichnung der abgefragten Tariffunktion enthält sowie einen oder mehrere Tarifwerte, die in Abhängigkeit von zuvor gesendeten Parametern ermittelt wurden.

3. System nach Anspruch 1 oder 2, dadurch gekennzeichnet, daß die Ein-/Ausgabeeinheit (16) und der Tarifrechner (18) jeweils an ein zentrales Kommunikationsnetzwerk (30) angeschlossen sind.

4. System nach einem der Ansprüche 1 - 3, dadurch gekennzeichnet, daß die Ein-/Ausgabeeinheit (16) einen Zwischenspeicher (26; 76) aufweist, der zur Zwischenspeicherung einer größeren Anzahl von ermittelten Tarifwerten zu bereits erfolgten Tarifabfragen ausgelegt ist.

5. System nach einem der Ansprüche 1 - 4, dadurch gekennzeichnet, daß die Ein-/Ausgabeeinheit (16) eine Schnittstelleneinheit (40) zum Umsetzen des Formats von Kurznachrichten des Mobilfunkdienstes (SMS) in ein HTTP-Format und eine Verarbeitungseinheit (50) aufweist, in der die Kurznachrichten im HTTP-Format verarbeitet werden.

6. System nach einem der Ansprüche 1 - 5, dadurch gekennzeichnet, daß die Ein-/Ausgabeeinheit (16) eine Mehrzahl von Modulen (58-70) aufweist, einschließlich eines Benutzermoduls (58) zum Verwalten von Benutzerrechten sowie von Anmeldungen und/oder Abmeldungen von Benutzern, wobei eine Abmeldung vorzugsweise automatisch eine bestimmte Zeitspanne nach einer Anmeldung bzw. einer letzten Abfrage erfolgt.

7. System nach einem der Ansprüche 1 - 6, dadurch gekennzeichnet, daß die Ein-/Ausgabeeinheit (16) eine Mehrzahl von Modulen (58-70) aufweist, einschließlich eines Vorlagenmoduls (66) zum Übersenden von Vorlagen für Tarifabfragen und/oder eines Listmoduls (64) zum Übersenden einer Liste der vorhandenen Module (58-70) an ein anforderndes mobiles Endgerät (12).

8. System nach einem der Ansprüche 1 - 7, dadurch gekennzeichnet, daß die Ein-/Ausgabeeinheit (16) eine Mehrzahl von Modulen (58-70) aufweist, einschließlich eines Nachrichtenmoduls (70) zum unaufgeforderten Senden von Nachrichten an sämtliche mobilen Endgeräte (12) des Systems (10).

9. Abfrageeinheit eines Tarifberechnungssystems nach einem der Ansprüche 1 - 8.

10. Verfahren zum Betreiben eines Tarifberechnungssystems nach einem der Ansprüche 1 - 8, mit den Schritten:
- Erstellen einer ersten alphanumerischen Kurznachricht im Format einer Tarifabfrage mittels des mobilen Endgerätes (12);
- Senden der ersten Kurznachricht an die zentrale Ein/Ausgabeeinheit (16);
- Ermitteln wenigstens eines Tarifwertes mittels des zentralen Tarifrechners (18);
- Erstellen einer zweiten alphanumerischen Kurznachricht mit dem Tarifwert mittels der zentralen Ein/Ausgabeeinheit; und
- Senden der zweiten Kurznachricht an das mobile Endgerät (12), das die erste Kurznachricht abgesandt hat.
